# EUROPÄISCHE PATENTSCHRIFT

(11) **EP 0 641 941 B1**
(45) Veröffentlichungstag und Bekanntmachung des Hinweises auf die Patenterteilung: **08.10.1997**
(21) Anmeldenummer: 94110846.6
(22) Anmeldetag: 12.07.1994
(51) Int. Cl.: F16B 21/02, F25D 23/06

(54) **Befestigungsvorrichtung**
Fastening device
Dispositif de fixation

(30) Priorität: 26.08.1993 DE 9312827 U
(43) Veröffentlichungstag der Anmeldung: 08.03.1995
(73) Patentinhaber: LIEBHERR-HAUSGERÄTE GMBH, 88416 Ochsenhausen (DE)
(72) Erfinder: Friedmann, Volker, D-88400 Biberach (DE)
(74) Vertreter: Gossel, Hans K., Dipl.-Ing.

(56) Entgegenhaltungen:
- DE-A- 1 515 740
- FR-A- 2 323 967
- US-A- 3 319 510

## Beschreibung

Die Erfindung betrifft eine Befestigungsvorrichtung zum Befestigen von Gegenständen oder Einrichtungen an aus Kunststoffplatten oder Kunststoffschalen bestehenden Wandungen, vorzugsweise an den inneren aus hinterschäumten Kunststoffplatten bestehenden Wandungen von Kühl- oder Gefrierschränken (FR-A-2 323 967).

Beispielsweise bei Kühl- oder Gefrierschränken besteht das Bedürfnis, an den inneren Wandungen des Kühlraums, die üblicherweise aus mit Polyurethanschaum hinterschäumten Kunststoffplatten bestehen, Einrichtungen, wie beispielsweise Halterungen oder Führungen für Borde oder Verdampfer, zu befestigen. Dabei können grundsätzlich übliche Befestigungselemente nicht verwendet werden, weil die den Kühlraum auskleidende Kunststoffschale nicht verletzt und nicht durchbohrt werden darf.

Aufgabe der Erfindung ist es daher, eine Befestigungsvorrichtung der eingangs angegebenen Art zu schaffen, mit der sich einfach und schnell Gegenstände oder Einrichtungen an Wandungen oder Schalen aus Kunststoff befestigen lassen, ohne daß diese die Wandungen oder Schalen durchdringen.

Erfindungsgemäß wird diese Aufgabe dadurch gelöst, daß die Wandungen oder Schalen mit sacklochartigen Einziehungen versehen sind, von denen jede zumindest im Bereich ihres Grundes einen elliptischen Querschnitt aufweist, und daß in die Einziehungen Bolzen einführbar sind, die im Bereich ihrer inneren Enden etwa komplementäre elliptische Verbreiterungen besitzen, so daß jeder Bolzen in den Einziehungen durch eine etwa 90° Drehung verankerbar ist. Die die Bolzen aufnehmenden Einziehungen werden sogleich bei der Herstellung der aus Kunststoffplatten oder Kunststoffschalen bestehenden Wandungen gebildet, und zwar beispielsweise im üblichen Tiefzieh- oder Spritzgießverfahren. Der Bolzen, der aus Stahl oder aber auch aus Kunststoff bestehen kann, wird dann durch eine Vierteldrehung in der sacklochartigen Einziehung ziehung verspannt. Paßt sich die Wandung der sacklochartigen aufgrund der Kriechneigung des Kunststoffes der Form des Bolzens an, ergibt sich ein bleibende Verformung, die die Verankerung des Bolzens in der Einziehung verbessert, weil sich dann statt einer nur kraftschlüssigen Verbindung zusätzlich eine Formschlüssige Verbindung ergibt. Auch ohne ein Kriechen oder Fließen des Kunststoffes ergibt sich aufgrund der üblichen elasto-plastischen Eigenschaften des Kunststoffes eine gute und feste Verbindung.

Bei der Herstellung der Wandungen lassen sich beliebig viele Einziehungen an Stellen oder Bereichen vorsehen, an denen später die Bolzen angebracht werden sollen. Dabei stören die Einziehungen grundsätzlich das einheitliche Aussehen der Wandungen nicht, so daß diese unschön nicht in Erscheinung treten.

In weiterer Ausgestaltung der Erfindung ist vorgesehen, daß die Einziehung in ihrem äußeren Bereich einen zylindrischen Abschnitt schnitt besitzt, in den ein komplementärer zylindrischer des Bolzens greift. Durch diese aufeinander abgestimmten zylindrischen Abschnitte des Bolzens und der Einziehung wird der Bolzen zentriert und gleichzeitig verhindert, daß er in der Einziehung wackeln kann. Zweckmäßigerweise weist der Bolzen zwischen seinem äußeren zylindrischen Abschnitt und seinem etwa elliptischen Endteil einen verjüngten zylindrischen Schaftteil auf. Auf diese Weise formt der elliptische Endteil des Bolzens nach seiner Vierteldrehung einen Hinterschnitt in die Einziehung der eine gute Verankerung sicherstellt.

In weiterer Ausgestaltung der Erfindung ist vorgesehen, daß sich der elliptische Abschnitt des Bolzens zu seinem Ende hin konusförmig verjüngt. Auf diese Weise wird im Übergangsbereich zwischen den verjüngten zylindrischen Schaftteil und dem diesen gegenüber verbreiterten, sich konusförmig verjüngenden elliptischen Endteil des Bolzens eine im Querschnitt sägezahnförmige Kante geschaffen, die sich in die Wandung der Einziehung einschneidet.

Die erfindungsgemäße Befestigungsvorrichtung ist insbesondere für mit Kunststoffschaum hinterschäumte Kunststoffplatten oder Kunststoffschalen geeignet, die eine verhältnismäßig geringe Wandstärke besitzen.

Ein Ausführungsbeispiel der Erfindung wird nachstehend anhand der Zeichnung näher erläutert. In dieser zeigt:
- Fig. 1:: eine Draufsicht auf einen mit einer Einziehung versehenen Wandungsteil, der aus einer mit Schaumkunststoff hinterspritzten Kunststoffschale besteht,
- Fig. 2:: einen Querschnitt längs der Linie II-II in Fig.1 durch den Wandungsteil miteingesetzten und verriegelten Bolzen,
- Fig. 3:: eine Unteransicht des in die Einziehung eingesetzten Bolzens,
- Fig. 4:: eine der Fig. 2 entsprechende Darstellung, in der sich der Bolzen in seiner Verriegelungsstellung befindet, und
- Fig. 5:: eine Unteransicht des gemäß Fig. 4 verriegelten Bolzens.

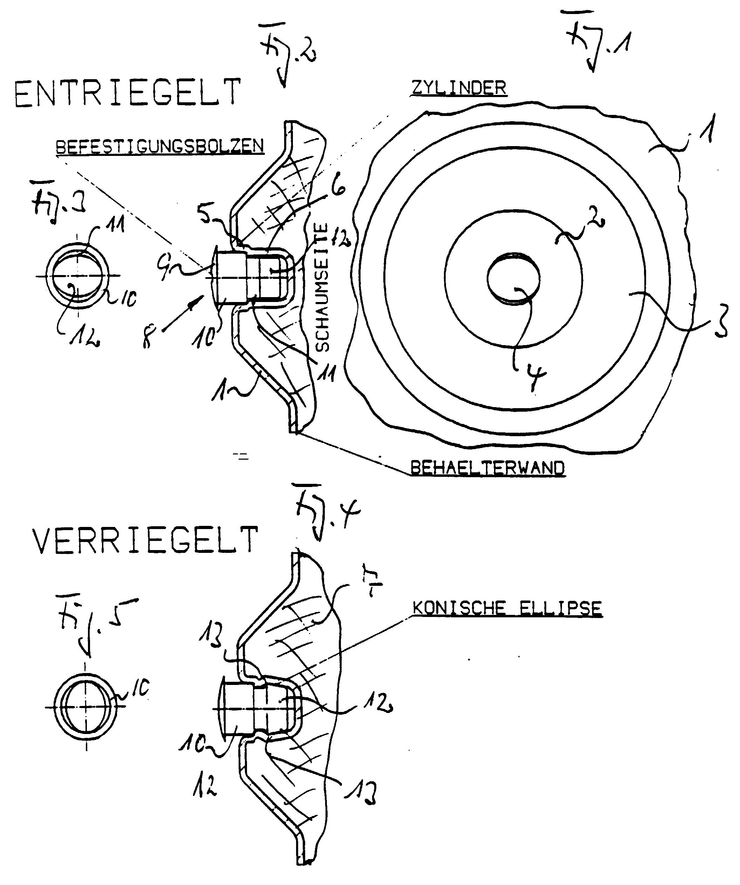

Fig. 1 zeigt einen aus einer Kunststoffplatte oder Kunststoffschale bestehenden Wandungsteil 1, der mit einer kegelstumpfartigen Erhöhung versehen ist, in deren oberen kreisscheibenförmigen Fläche 2 eine Einziehung 4 vorgesehen ist. Die Einziehung 4 ist sacklochartig ausgebildet und besitzt einen oberen zylindrischen Abschnitt 5 geringer Tiefe, an den sich bis zum Grund der Einziehung hin ein im Querschnitt elliptischer Abschnitt 6 anschließt. Die Kunststoffschale 1 einschließlich der Erhöhung 3 und der Einziehung 4 wird im Tiefziehverfahren hergestellt. Die Schale 1 wird in üblicher Weise mit eineim Kunststoffschaum 7 hinterschäumt.

In die sacklochartige Einziehung 4 wird als Befestigungselement der Befestigungsbolzen 8 eingesetzt. Dieser besitzt einen dreiteiligen Schaft, von denen der an den mit einem Schraubenzieherschlitz versehenen Kopf 9 anschließende Teil 10 zylinderförmig ist. An den äußeren zylinderförmigen Abschnitt 10 schließt sich ein kurzer zylindrischer Abschnitt 11 geringeren Druchmessers an. Der innere Endteil 12 des Bolzens ist elliptisch ausgebildet. Dabei verjüngt sich zusätzlich der elliptische Teil 12 in der aus Fig. 4 ersichtlichen Weise konusförmig zu seinem Ende hin. Durch diese konusartige Verjüngung des elliptischen Teils werden zwei einander gegenüberliegende bogenförmige Schneidkanten 13 gebildet.

Aus der verriegelten Stellung des Bolzens 8 in Fig. 4 ist ersichtlich, daß der elliptisch verbreiterte Teil 12 mit Hinterschnitt in die Einziehung 4 eingreift.

## Patentansprüche

1. Befestigungsvorrichtung zum Befestigen von Gegenständen oder Einrichtungen an aus Kunststoffplatten oder Kunststoffschalen bestehenden Wandungen (1), vorzugsweise an den inneren aus hinterschäumten Kunststoffplatten bestehenden Wandungen (1) von Kühl- oder Gefriergeräten, bestehend aus einem Bolzen (8) und einer Wandung (1), die einstückig mit einer den Bolzen (8) haltemden sacklochartigen Einziehung (4) versehen ist,
dadurch gekennzeichnet,
daß die Einziehung (4) im Bereich ihres Grundes einen elliptischen Querschnitt (6) aufweist und daß der in die Einziehung (4) einführbare Bolzen (8) im Bereich seines inneren Endes eine etwa komplementäre elliptische Verbreiterung (12) besitzt, so daß der Bolzen (8) der Einziehung (4) durch eine etwa 90°-Drehung verankerbar ist.

2. Befestigungsvorrichtung nach Anspruch 1, dadurch gekennzeichnet, daß die Einziehung in ihrem äußeren Bereich einen zylindrischen Abschnitt besitzt, in den ein komplementärer zylindrischer Abschnitt des Bolzens greift.

3. Befestigungsvorrichtung nach Anspruch 1 oder 2, dadurch gekennzeichnet, daß der Bolzen zwischen seinem äußeren zylindrischen Abschnitt und seinem etwa elliptischen Endteil einen verjüngten zylindrischen Schaftteil besitzt.

4. Befestigungsvorrichtung nach Anspruch 3, dadurch gekennzeichnet, daß sich der elliptische Abschnitt des Bolzens zu seinem Ende hin konusförmig verjüngt.

## Claims

1. Fastening arrangement for securing objects or devices to walls (1) consisting of plates or shells made of synthetic material, preferably to the inner walls (1) of refrigerators or freezers, said inner walls consisting of plastic plates being provided with plastic foam at the rear side, said fastening arrangement comprising a pin (8) and a wall (1) which is integrally provided with a bottom hole-like recess (4) holding the pin (8),
characterized in
that the recess (4) has an elliptical cross-section (6) in the area of its bottom and that the pin (8) which is insertable into the recess (4) has an approximately complementary elliptical widening (12) in the section of its inner end so that the pin (8) can be fastened in the recess (4) by a rotation through approximately 90°.

2. Fastening arrangement according to claim 1, characterized in that the recess has a cylindrical section in its outer region with which a complementary cylindrical section of the pin comes into engagement.

3. Fastening arrangement according to claim 1 or 2, characterized in that the pin has a tapered cylindrical shank portion between its outer cylindrical section and its approximately elliptical end part.

4. Fastening arrangement according to claim 3, characterized in that the elliptical section of the pin is diminished towards its end in a tapered form.

## Revendications

1. Dispositif de fixation pour fixer des objets ou installations à des parois (1) constituées de plaques en matière synthétique ou de coques en matière synthétique, de préférence des parois intérieures (1) constituées de plaques en matière synthétique, sur lesquelles est appliquée de la mousse à l'arrière, d'appareils de réfrigération ou de congélation, constitué d'un boulon (8) et d'une paroi (1) qui est pourvue d'un creux en forme de trou borgne (4), venu de matière, retenant le boulon (8), caractérisé en ce que le creux (4) présente au voisinage de son fond une section transversale elliptique (6), et en ce que le boulon (8) pouvant être inséré dans le creux (4) possède au voisinage de son extrémité intérieure un élargissement elliptique (12) à peu près complémentaire de façon que le boulon (8) puisse être ancré dans le creux (4) par une rotation sur environ 90°.

2. Dispositif de fixation selon la revendication 1, caractérisé en ce que le creux possède dans sa zone extérieure un tronçon cylindrique dans lequel s'engage un tronçon cylindrique complémentaire du boulon.

3. Dispositif de fixation selon la revendication 1 ou 2, caractérisé en ce que le boulon possède entre son tronçon cylindrique extérieur et sa partie d'extrémité à peu près elliptique une partie de tige cylindrique diminuée.

4. Dispositif de fixation selon la revendication 3, caractérisé en ce que le tronçon elliptique du boulon diminue vers son extrémité en forme de cône.
